# EUROPEAN PATENT APPLICATION

(11) **EP 3 657 412 A1**
(43) Date of publication of application: **27.05.2020**
(21) Application number: 19192609.6
(22) Date of filing: 20.08.2019
(51) Int. Cl.: G06Q 10/06

(54) **SYSTEM FOR MANAGING MAINTENANCE WORK**

(30) Priority: 26.11.2018 JP 2018220269
(71) Applicant: Toshiba Tec Kabushiki Kaisha, 141-8562 Tokyo (JP)
(72) Inventor: OTSU, Tomoyuki, Shinagawa-ku, Tokyo 141-8562 (JP)
(74) Representative: Bandpay & Greuter

(57) **Abstract**

According to one embodiment, a progress state estimation unit (estimation means) estimates a progress state of current work of all the workers based upon a past average work time of each worker with respect to the pieces of work assigned to all the workers, a start time of work currently being performed by each worker, and a current time. Further, an assistant selection unit (selection means) selects a worker who assists a first worker from among second workers other than the first worker whose work progress is estimated to be delayed by the progress state estimation unit based upon information on a progress state of work of the second worker, information on a distance between the first worker and the second worker, and information on an ability of the second worker.

## Description

### FIELD

Embodiments described herein relate generally to a maintenance management apparatus.

### BACKGROUND

In a related art, it is known that, as an example, a maintenance person performing maintenance is determined based upon the experience and result of the maintenance person, a distance between the maintenance person and a site, and the like when a failure occurs in an apparatus (for example, refer to JP-A-2006-106861).

However, in the example of the related art described above, the maintenance person capable of coping with the failure can be determined, but when the maintenance person is working, the maintenance person cannot be promptly dispatched. That is, it is not considered to dispatch an assistant in order to promptly solve a delay when the delay occurs in the work currently in progress.

### SUMMARY OF INVENTION

To solve such problem, there is provided a maintenance management apparatus, comprising: estimation means for estimating a progress state of current work of each worker based upon a past average work time of each worker with respect to the pieces of work assigned to a plurality of workers, a start time of work currently being performed by each worker, and a current time; and selection means for selecting a worker who assists a first worker from among second workers other than the first worker whose work progress is estimated to be delayed by the estimation means based upon information on a progress state of work of the second worker, information on a distance between the first worker and the second worker, and information on an ability of the second worker.

Preferably, the past average work time is calculated based upon a start time and an end time when each worker performed the same work in the past.

Preferably still, the selection means selects the worker who assists the first worker based upon a remaining work time of the work currently being performed by the second worker, a time required for the second worker to go to the first worker for the assistance, and the number of times of work experience of the work being performed by the first worker of the second worker.

Preferably yet, the maintenance management apparatus further comprises: confirmation means for confirming whether or not the assistance of the work is necessary for the first worker, wherein the selection means selects the worker who assists the first worker on the condition that the first worker replies that the assistance of the work is necessary with respect to the confirmation of the confirmation means.

Suitably, the maintenance management apparatus further comprises: assignment means for determining a worker who is assigned to work based upon a standard work time required to complete the work and the average work time of each worker for the work.

Suitably still, the maintenance management apparatus further comprises: receiving means for receiving an assistance request from the worker, wherein the selection means selects a worker performing the assistance from among workers other than a worker who issues the assistance request on the condition that the receiving means receives the assistance request.

The invention also relates to a maintenance management method, comprising the steps of: estimating a progress state of current work of each worker based upon a past average work time of each worker with respect to the pieces of work assigned to a plurality of workers, a start time of work currently being performed by each worker, and a current time; and selecting a worker who assists a first worker from among second workers other than the first worker whose work progress is estimated to be delayed by the estimating step based upon information on a progress state of work of the second worker, information on a distance between the first worker and the second worker, and information on an ability of the second worker.

Preferably, the past average work time is calculated based upon a start time and an end time when each worker performed the same work in the past.

Preferably still, the maintenance management method further comprises the step of : selecting the worker who assists the first worker based upon a remaining work time of the work currently being performed by the second worker, a time required for the second worker to go to the first worker for the assistance, and the number of times of work experience of the work being performed by the first worker of the second worker.

Preferably yet, the maintenance management method further comprises steps of: confirming whether or not the assistance of the work is necessary for the first worker, and selecting the worker who assists the first worker on the condition that the first worker replies that the assistance of the work is necessary with respect to the confirming step.

Suitably, the maintenance management method further comprises step of: determining a worker who is assigned to work based upon a standard work time required to complete the work and the average work time of each worker for the work.

Suitably still, the maintenance management method further comprises steps of: receiving an assistance request from the worker, and selecting a worker performing the assistance from among workers other than a worker who issues the assistance request on the condition that the assistance request is received in the receiving step.

The invention also concerns a computer program comprising instructions which, when the program is executed by a computer, cause the computer to carry out the steps of the method described above.

The invention further concerns a computer-readable medium having stored thereon the computer program described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an example of a configuration of a maintenance management system;
FIG. 2 is a hardware block diagram illustrating an example of a hardware configuration of a server apparatus;
FIG. 3 is a hardware block diagram illustrating an example of a hardware configuration of a portable terminal;
FIG. 4 is a functional block diagram illustrating an example of a functional configuration of the portable terminal;
FIG. 5 is a diagram illustrating an example of a work log file;
FIG. 6 is a functional block diagram illustrating an example of a functional configuration of the server apparatus;
FIG. 7 is a diagram illustrating an example of a work assignment file;
FIG. 8 is a diagram illustrating an example of a work result file in which an average work time, and the like of each worker are recorded;
FIG. 9 is a diagram illustrating an example of a standard work time file in which a standard work time of each work is recorded;
FIG. 10 is a diagram illustrating an example of a screen for confirming the necessity of an assistance request displayed on a portable terminal of a worker whose work is estimated to be delayed;
FIG. 11 is a flowchart illustrating an example of a flow of processing of calculating an average work time of a worker;
FIG. 12 is a flowchart illustrating an example of a flow of a series of processing performed by the maintenance management system;
FIG. 13 is a flowchart illustrating an example of a flow of work assignment processing; and
FIG. 14 is a flowchart illustrating an example of a flow of assistant selection processing.

### DETAILED DESCRIPTION

Embodiments provide a maintenance management apparatus capable of promptly solving a delay when the delay occurs in the work currently in progress.

In general, according to one embodiment, a maintenance management apparatus includes estimation means and selection means. The estimation means estimates a progress state of current work of each worker based upon a past average work time of each worker with respect to the pieces of work assigned to a plurality of worker, a start time of work currently being performed by each worker, and a current time. The selection means selects a worker who assists a first worker from among second workers other than the first worker whose work progress is estimated to be delayed by the estimation means, based upon information on a progress state of work of the second worker, information on a distance between the first worker and the second worker, and information on an ability of the second worker.

### Schematic Configuration of a Maintenance Management System

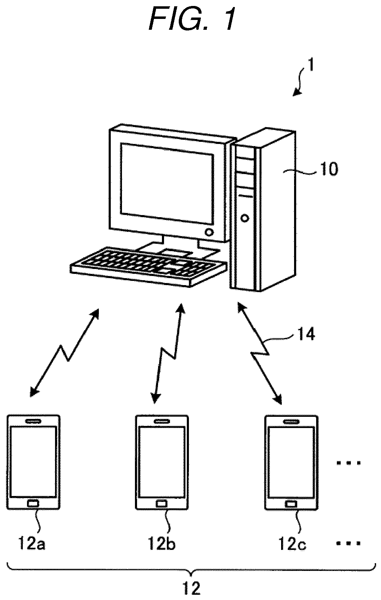

Hereinafter, an embodiment will be described with reference to the accompanying drawings. First, a maintenance management system which is the embodiment will be described with reference to a drawing. FIG. 1 is a diagram illustrating an example of a configuration of a maintenance management system 1. The maintenance management system 1 is a system that manages a progress state of the work of a plurality of workers. When it is estimated that the work of a certain worker Q is delayed, the maintenance management system 1 confirms whether or not the assistance (support) of the work is necessary for the worker Q. Further, the worker Q is an example of a first worker. When the worker Q requires the assistance of the work, the maintenance management system 1 selects an appropriate worker R who performs the assistance thereof from among other workers R (a, b, c, ...), thereby performing the assistance of the work. Further, the worker R is an example of a second worker. Hereinafter, the worker Q and the worker R are collectively referred to as all the workers T.
The maintenance management system 1 includes a server apparatus 10 and a portable terminal 12 (12a, 12b, 12c, ...) owned by all the workers T respectively.
The server apparatus 10 controls the overall operations of the maintenance management system 1. Specifically, the server apparatus 10 estimates a progress state of the current work of all the workers T. Further, the server apparatus 10 confirms whether or not the assistance of work is necessary for the worker Q whose work progress is estimated to be delayed. Further, the server apparatus 10 receives an assistance request from the worker Q whose work progress is estimated to be delayed, and then selects a worker S who assists the worker Q from among the workers R.
The portable terminal 12 (12a, 12b, 12c, ...) is a terminal apparatus including a communication function such as, for example, a smart phone or a tablet terminal, and the like respectively owned by all the workers T. The portable terminal 12 generates a work log which is the work history of all the workers T based upon a work content, a start time of the work, and an end time thereof which are respectively inputted by all the workers T. Further, the portable terminal 12 is respectively associated with all the workers T. That is, when the portable terminal 12 is specified, a worker who owns the specified portable terminal is uniquely determined. Further, the portable terminal 12 performs communication with the server apparatus 10 by a wireless communication 14, thereby transmitting and receiving various data, various files, and the like.

### Hardware Configuration of a Server Apparatus

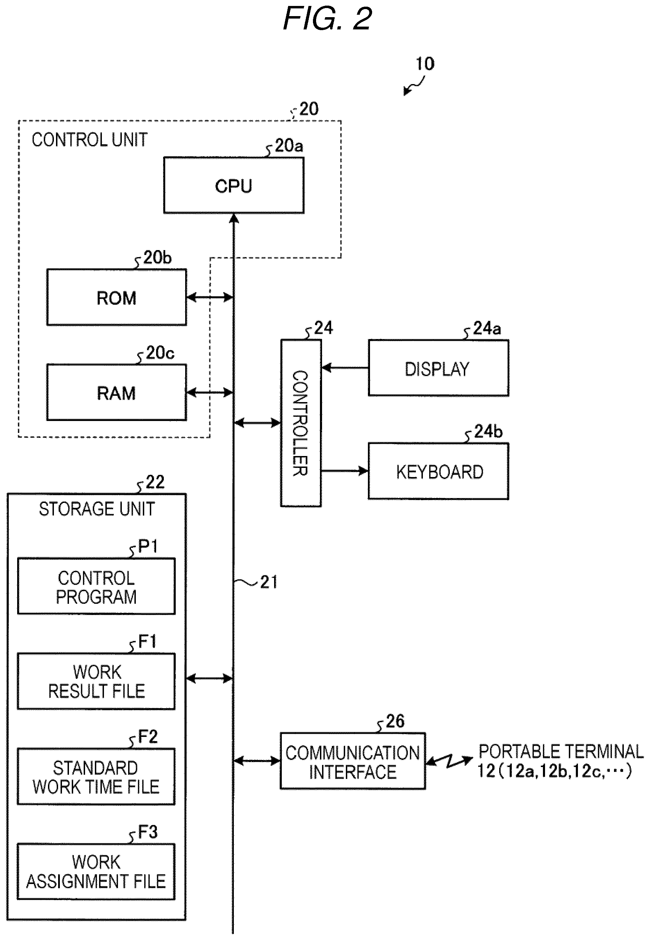

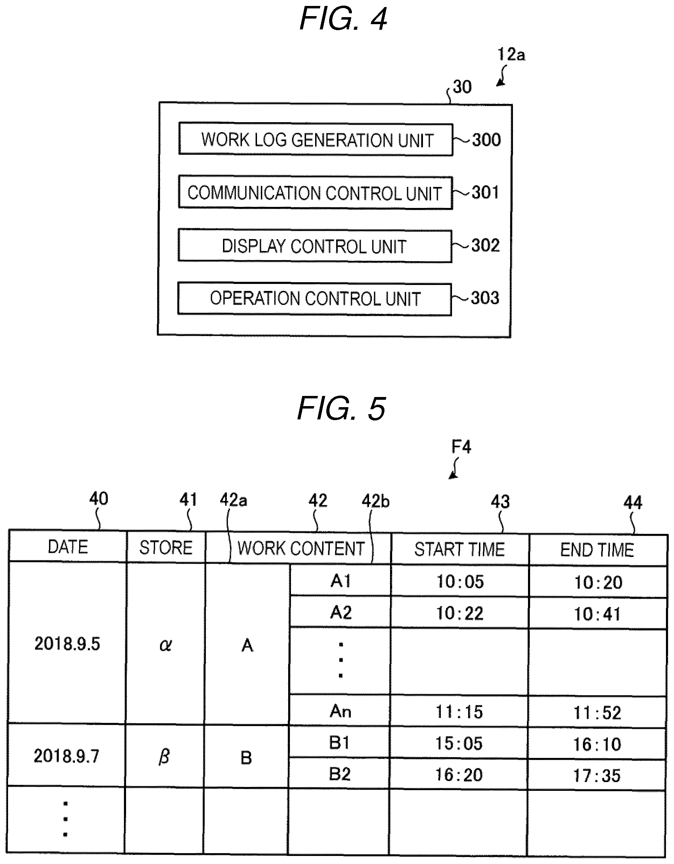

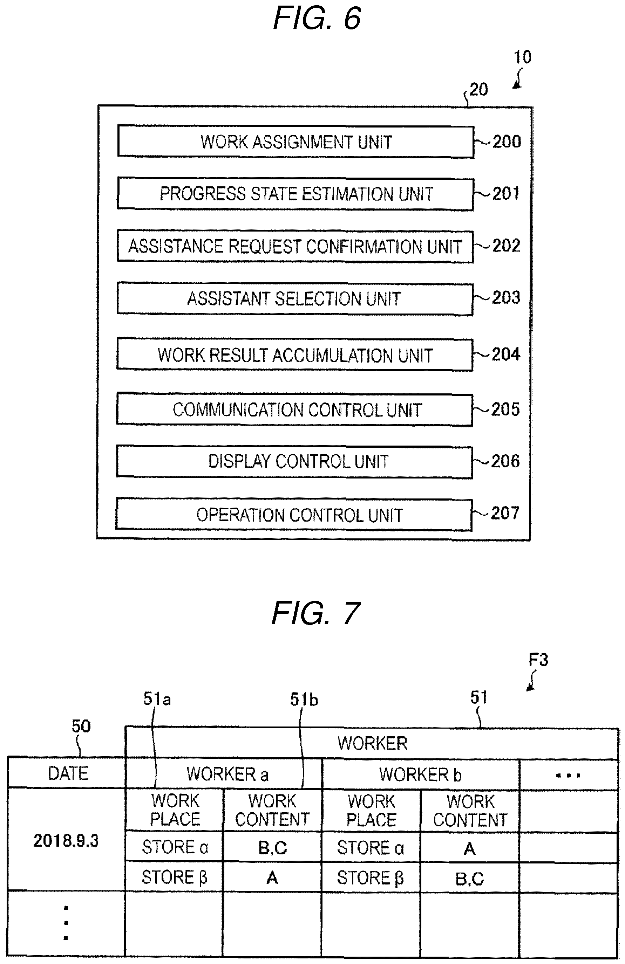

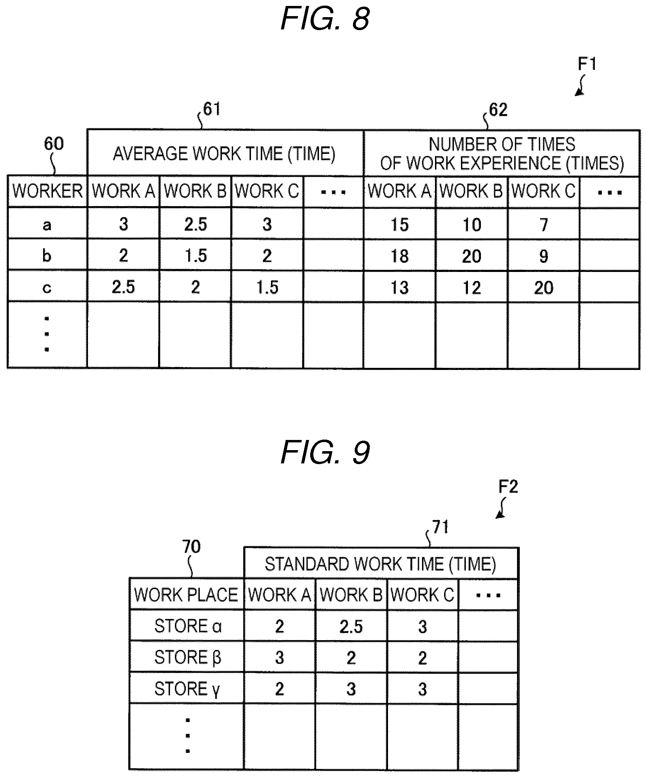

Next, a hardware configuration of the server apparatus 10 will be described. FIG. 2 is a block diagram illustrating an example of the hardware configuration of the server apparatus 10. The server apparatus 10 includes a control unit 20 for controlling each unit. The control unit 20 includes a CPU (Central Processing Unit) 20a, a ROM (Read Only Memory) 20b, and a RAM (Random Access Memory) 20c. The CPU 20a is connected to the ROM 20b and the RAM 20c via a bus line 21. The CPU 20a develops various programs stored in the ROM 20b and a storage unit 22 in the RAM 20c. The CPU 20a controls the server apparatus 10 by the operation thereof according to various programs developed in the RAM 20c. That is, the control unit 20 has a general computer configuration.
The control unit 20 is further connected to the storage unit 22, a controller 24, and a communication interface 26 via the bus line 21.
The storage unit 22 is a non-volatile memory such as a flash memory or an HDD (Hard Disk Drive) in which storage information is stored even though the power supply is turned off. The storage unit 22 stores a program, and the like including a control program P1. The control program P1 is a program for implementing a function provided in the server apparatus 10. Further, the storage unit 22 stores a work result file F1, a standard work time file F2, and a work assignment file F3.
The work result file F1 is a file in which an average work time 61 for each work of a worker and the number of times of work experience 62 of the work are stored. The work result file F1 is generated based upon a content of a work log file F4 (FIG. 5) stored by the portable terminal 12. The details thereof will be described later (FIG. 8).
The standard work time file F2 is a file in which a standard work time 71 required for each work is stored for each store. The details thereof will be described later (FIG. 9).
The work assignment file F3 is a file in which a work content 51b respectively assigned to all the workers T is stored. The details thereof will be described later (FIG. 7).
The controller 24 is connected to a display 24a and a keyboard 24b. The controller 24 controls various kinds of connected hardware based upon a command from the control unit 20.
The display 24a displays image information, text information, and the like outputted from the server apparatus 10. The display 24a is, for example, a liquid crystal monitor or an organic EL monitor, and the like.
The keyboard 24b provides an input of necessary information and an operation instruction to the server apparatus 10 when the server apparatus 10 performs various kinds of processing. Further, a touch panel laminated on the screen of the display 24a may be used instead of the keyboard 24b. Further, the keyboard 24b and the touch panel may be used together.
The communication interface 26 is an interface for communicating with the portable terminal 12 via wireless communication such as, for example, a wireless LAN, and the like.

### Hardware Configuration of a Portable terminal

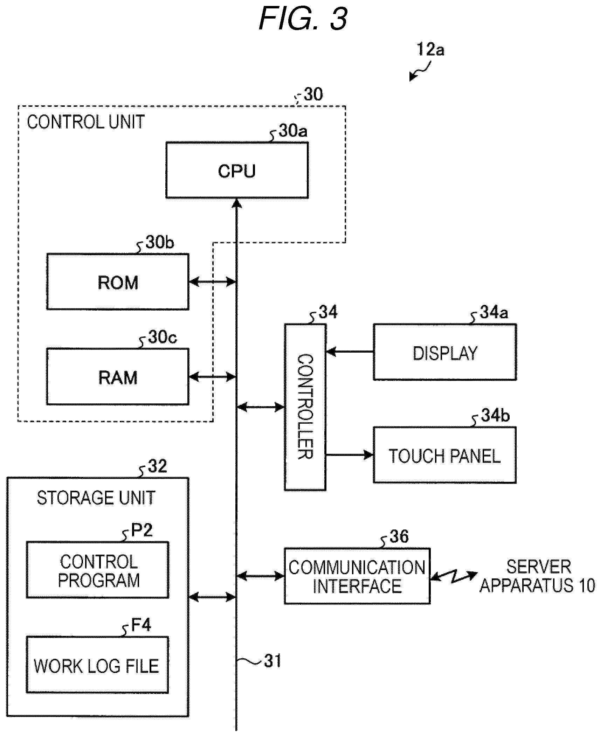

Next, a hardware configuration of the portable terminal 12 (12a, 12b, 12c, ...) will be described. FIG. 3 is a hardware block diagram illustrating an example of a hardware configuration of the portable terminal 12a. Further, since all the portable terminals 12 include the same hardware configuration, the following description will be performed for the portable terminal 12a.
The portable terminal 12a includes a control unit 30 for controlling each unit. The control unit 30 includes a CPU 30a, a ROM 30b, and a RAM 30c. The CPU 30a is connected to the ROM 30b and the RAM 30c via a bus line 31. The CPU 30a develops various programs stored in the ROM 30b and a storage unit 32 in the RAM 30c. The CPU 30a controls the portable terminal 12a by the operation thereof according to various programs developed in the RAM 30c. That is, the control unit 30 has a general computer configuration.
The control unit 30 is further connected to the storage unit 32, a controller 34, and a communication interface 36 via the bus line 31.
The storage unit 32 is a non-volatile memory such as a flash memory, and the like in which storage information is stored even though the power supply is turned off. The storage unit 32 stores a program, and the like including a control program P2. The control program P2 is a program for implementing a function provided in the portable terminal 12a. Further, the storage unit 32 stores the work log file F4.
The work log file F4 is a file in which information representing a progress state of the work of a worker is stored. The details thereof will be described later (FIG. 5).
The controller 34 is connected to a display 34a and a touch panel 34b. The controller 34 controls various connected hardware based upon a command from the control unit 30.
The display 34a displays image information, text information, and the like outputted from the portable terminal 12a. The display 34a is, for example, a liquid crystal monitor or an organic EL monitor, and the like.
The touch panel 34b provides an input of necessary information and an operation instruction to the portable terminal 12a when the portable terminal 12a performs various kinds of processing.
The communication interface 36 is an interface for communicating with the server apparatus 10 via wireless communication such as a wireless LAN, and the like.

### Functional Configuration of a Portable Terminal

Next, a functional configuration of the portable terminal 12a will be described. FIG. 4 is a functional block diagram illustrating an example of a functional configuration of the portable terminal 12a.
The control unit 30 of the portable terminal 12a develops the control program P2 (FIG. 3) in the RAM 30c and operates the developed control program P2, thereby realizing a work log generation unit 300, a communication control unit 301, a display control unit 302, and an operation control unit 303 all of which are illustrated in FIG. 4 as functional units.
The work log generation unit 300 generates the above-described work log file F4 (FIG. 5).
The communication control unit 301 controls wireless communication when exchanging information with the server apparatus 10. Specifically, the communication control unit 301 receives a transmission request of the work log file F4 from the server apparatus 10 and transmits the work log file F4 to the server apparatus 10. Further, the communication control unit 301 transmits a start time 43 and an end time 44 of the work illustrated in FIG. 5 to the server apparatus 10. Further, the communication control unit 301 transmits an assistance request of the work to the server apparatus 10.
The display control unit 302 generates display information to be displayed on the display 34a. Further, the display control unit 302 displays the generated display information on the display 34a.
The operation control unit 303 receives operation information of the touch panel 34b and transfers the received operation information thereof to the control unit 30. Thereafter, the control unit 30 is caused to perform processing corresponding to the operation of the touch panel 34b.

### Work Log File

FIG. 5 is a diagram illustrating an example of the work log file F4. The work log file F4 records a date 40, a store name 41, a work content 42, the start time 43, and the end time 44. Further, for example, the work log file F4 is inputted from the portable terminal 12a owned by the worker Q himself or herself. The same is also applied to the worker R other than the worker Q. Hereinafter, a case in which the worker Q inputs the work log file F4 will be described.
The date 40 records the date on which the work is performed. With respect to the date 40, for example, when a work assignment which will be described is performed, the date on which the assigned work is performed is transmitted to the portable terminal 12a of the worker Q who performs the corresponding work, after which the transmitted date is recorded in the work log file F4.
The store name 41 records the name of a store where the work is performed. With respect to the store name 41, for example, when the work assignment which will be described later is performed, the name of the store where the assigned work is performed is transmitted to the portable terminal 12a of the worker Q who performs the corresponding work, after which the transmitted name of the store is recorded in the work log file F4.
The work content 42 records information indicating a content of the work. The work content 42 is formed of, for example, a large classification 42a and a small classification 42b. The large classification 42a is, for example, the name of the work, and the like. The small classification 42b is, for example, the name of the small work, and the like forming one work. With respect to the work content 42, for example, when the work assignment which will be described later is performed, the assigned work content is transmitted to the portable terminal 12a of the worker Q who performs the corresponding work, after which the transmitted assigned work content is recorded in the work log file F4.
The start time 43 records the time when the work starts. When starting the work, the worker Q opens the work log file F4 of the portable terminal 12a owned by the worker Q and inputs the start time 43. Specifically, for example, when the worker Q presses down the corresponding column of the start time 43, the portable terminal 12a may read the current time from the CPU 30a and may record the current time read therefrom in the corresponding column of the start time 43.
The end time 44 records the time when the work is completed. When the work is completed, the worker Q opens the work log file F4 of the portable terminal 12a owned by the worker Q and inputs the end time 44. Specifically, for example, when the worker Q presses down the corresponding column of the end time 44, the portable terminal 12a may read the current time from the CPU 30a and may record the current time read therefrom in the corresponding column of the end time 44.
Further, a specific example will not be described, but when the start time 43 and the end time 44 are recorded, in preparation for a case where the corresponding column is accidentally pressed down, the operation control unit 303 of the portable terminal 12a may include a GUI (Graphical User Interface) for performing confirmation or cancellation after the time is recorded in the corresponding column of the work log file F4.

### Functional Configuration of a Sever Apparatus

FIG. 6 is a functional block diagram illustrating an example of a functional configuration of the server apparatus 10. The control unit 20 of the server apparatus 10 develops and implements the control program P1 (FIG. 3) in the RAM 20c, thereby realizing a work assignment unit 200, a progress state estimation unit 201, an assistance request confirmation unit 202, an assistant selection unit 203, a work result accumulation unit 204, a communication control unit 205, a display control unit 206, and an operation control unit 207 all of which are illustrated in FIG. 6 as functional units.
The work assignment unit 200 determines a worker to be assigned to work based upon a standard work time required for completing the work and each average work time 61 of all the workers T for the work. Further, the work assignment unit 200 is an example of an assignment unit.
The progress state estimation unit 201 estimates the progress state of the current work of all the workers T based upon the past average work time 61 of each worker with respect to the pieces of work respectively assigned to all the workers T, the start time 43 of the work currently being performed by each worker, and the current time. Further, the progress state estimation unit 201 is an example of an estimation unit.
The assistance request confirmation unit 202 confirms whether or not the assistance of the work is necessary for the worker Q whose work progress is estimated to be delayed. Further, the assistance request confirmation unit 202 is an example of a confirmation unit.
The assistant selection unit 203 selects the worker S who assists the worker Q from among the workers R other than the worker Q whose work progress is estimated to be delayed by the progress state estimation unit 201 based upon information on a progress state of the work of the worker R, information on a distance between the worker Q and the worker R, and information on an ability of the worker R. Further, the assistant selection unit 203 is an example of a selection unit.
Here, the information on the progress state of the work of the worker R is, for example, a remaining work time of the work currently being performed by the worker R. Further, the information on the distance between the worker Q and the worker R is, for example, the time required for the worker R to go to assist the worker Q. Further, the information on the ability of the worker R is, for example, the number of times of work experience of the work being performed by the worker Q.
Further, the assistant selection unit 203 selects the worker S who assists the worker Q on the condition that the worker Q replies that the assistance of the work is necessary in response to the confirmation of the assistance request confirmation unit 202. Further, the assistant selection unit 203 calls the worker S selected from among the workers R to the effect that the assistance is desired to performed. Further, the assistant selection unit 203 is an example of a selection unit.
The work result accumulation unit 204 generates the work result file F1 of all the workers T by referring to the work log file F4 of all the workers T. Further, the work result accumulation unit 204 calculates the average work time 61 of each work based upon the start time 43 and the end time 44 when all the workers T performed the same work in the past.
The communication control unit 205 controls wireless communication when exchanging information with the portable terminal 12a. Specifically, the communication control unit 205 requests the portable terminal 12a to transmit the work log file F4, and receives the work log file F4 from the portable terminal 12a. Further, the communication control unit 205 receives the start time 43 of the work and the end time 44 thereof from the portable terminal 12a. Further, the communication control unit 205 receives the assistance request of the work from the portable terminal 12a. Further, the communication control unit 205 is an example of a receiving unit. The display control unit 206 generates display information to be displayed on the display 24a. Further, the display control unit 206 displays the generated display information on the display 24a.
The operation control unit 207 receives operation information on the keyboard 24b and transfers the operation information thereon to the control unit 20. Thereafter, the control unit 20 is caused to perform processing corresponding to the operation of the keyboard 24b.

### Work Assignment File

FIG. 7 is a diagram illustrating an example of the work assignment file F3. The work assignment file F3 records the date 50 and worker information 51.
The date 50 records the date on which the work is performed. With respect to the date 50, for example, the date assigned when the work assignment which will be described later is performed is recorded in the work assignment file F3.
The worker information 51 records a work place 51a and the work content 51b for each worker. The work place 51a is information for specifying a work place, and records, for example, a store name, and the like. The work content 51b is information for specifying a work content. When a plurality of pieces of work is assigned, a plurality of work contents is recorded.

### Work Result File

FIG. 8 is a diagram illustrating an example of the work result file F1 in which the average work time 61, and the like of all the workers T are respectively recorded. The work result file F1 records the worker information 60, the average work time 61, and the number of times of work experience 62.
The worker information 60 is information for specifying each worker, and records, for example, a worker identification number, and the like. The average work time 61 records the average work time of each work performed by the corresponding worker in the past. The number of times of work experience 62 records the number of times of each work performed by the corresponding worker in the past.
Further, the work result file F1 is updated, for example, at the timing when the server apparatus 10 receives the work log file F4 from the portable terminal 12a. Further, the work result file F1 may be updated at a predetermined timing such as 17:00 every day.
As an example, it is assumed that a worker a completes work A in two hours. In the work result file F1 before the update illustrated in FIG. 8, since the average work time of the work A of the worker a is recorded as 3 hours and the number of times of work experience of the work A is recorded as 15 times, the new average work time 61 is calculated as 2.9 hours ((3 hours × 15 times + 2 hours)/16 times). Next, the calculated average work time 2.9 hours and 16 times of work experience are overwritten on the work result file F1, and the work result file F1 is updated.
Further, the work result file F1 of FIG. 8 calculates the average work time by collecting pieces of work performed at different work places, but the work result for each work place may be recorded.

### Standard Work Time File

FIG. 9 is a diagram illustrating an example of the standard work time file F2 in which the standard work time of each work is recorded. The standard work time file F2 records a work place 70 and a standard work time 71.
The work place 70 is information for specifying a work place, and records, for example, a store name. The standard work time 71 records a standard work time for each work content. For example, when a worker having a standard work ability performs the corresponding work in the corresponding store, the standard work time is defined as the time required from the start of the work to the completion of the work. For example, the standard work time is set by combining work contents and work procedures of each work when the work contents and work procedures thereof are set.

### Assistance Confirmation Screen

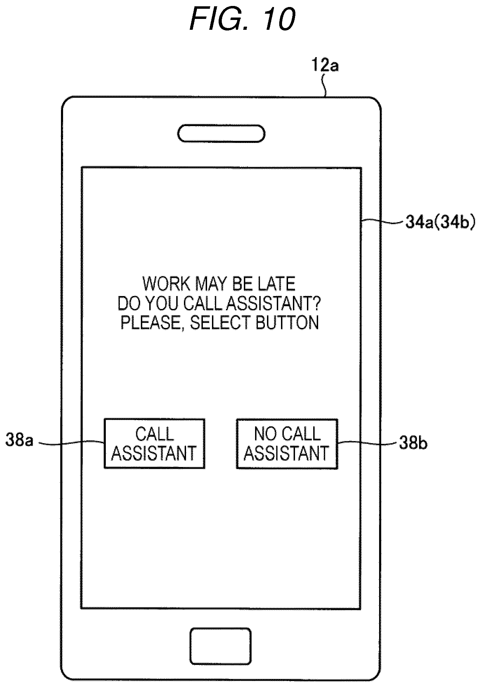

Next, a method of confirming the necessity of the work assistance for the worker Q whose work is estimated to be delayed will be described with reference to FIG. 10. FIG. 10 is a diagram illustrating an example of a screen for confirming the necessity of the assistance request to be displayed on the portable terminal 12a of the worker Q whose work is estimated to be delayed.
In the display 34a of the portable terminal 12a, information indicating that the work is delayed and information requesting the selection of whether or not an assistant who assists the work is necessary are displayed.
Further, in the display 34a, an assistance request button 38a for instructing the request of the assistant and an assistance unnecessary button 38b for instructing that the assistant is not necessary are displayed. When the touch panel 34b of the portable terminal 12a detects that the assistance request button 38a is pressed down, information indicating that the assistant is requested is transmitted to the server apparatus 10. Further, when the touch panel 34b detects that the assistance unnecessary button 38b is pressed down, information indicating that the assistant is unnecessary is transmitted to the server apparatus 10.

### Average Work Time Calculation Processing

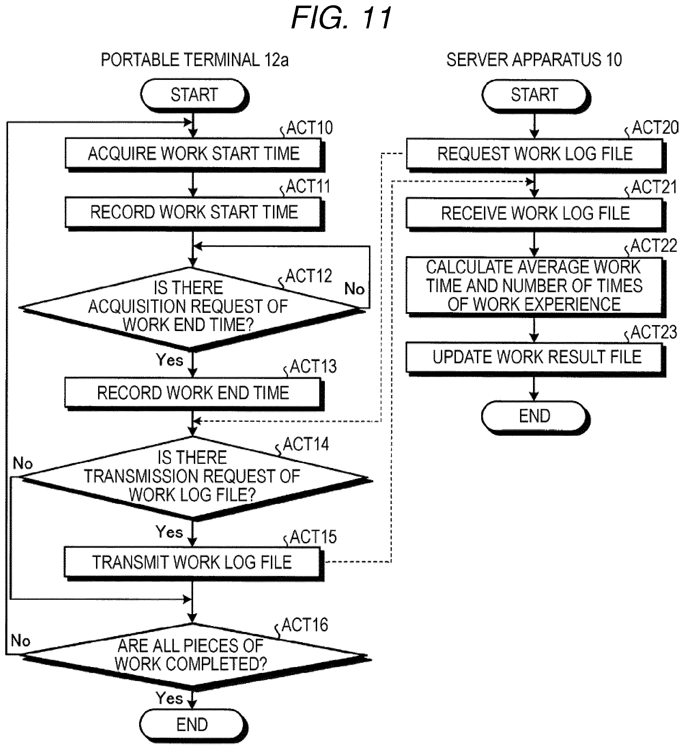

Next, a calculation method of the average work time 61 recorded in the work result file F1 will be described. FIG. 11 is a flowchart illustrating an example of a flow of processing of calculating the average work time 61 of the worker Q.
First, a flow of processing of the portable terminal 12a will be described. The operation control unit 303 detects that a column indicating the start time 43 of the work content 42 is pressed down in the work log file F4, and acquires the time when the column is pressed down, for example, from a timer of the CPU 30a (ACT 10).
The work log generation unit 300 records the acquired time in the pressed column of the work log file F4 (ACT 11).
The operation control unit 303 determines whether or not there is an acquisition request of the end time 44 of the work currently being performed (ACT 12). Specifically, the operation control unit 303 determines that there is the acquisition request of the end time 44 when detecting that the column indicating the end time 44 of the work currently being performed is pressed down in the work log file F4. When it is determined that there is the acquisition request of the end time 44 (ACT 12: Yes), the processing proceeds to ACT 13. On the other hand, when it is not determined that there is the acquisition request of the end time 44 (ACT 12: No), the processing repeats ACT 12.
When acquisition of the end time 44 is requested in ACT 12, for example, the work log generation unit 300 records the time acquired from the timer of the CPU 30a in the pressed column of the work log file F4 (ACT 13).
The communication control unit 301 determines whether or not there is a transmission request of the work log file F4 from the server apparatus 10 (ACT 14). When it is determined that there is the transmission request of the work log file F4 (ACT 14: Yes), the processing proceeds to ACT 15. On the other hand, when it is not determined that there is the transmission request of the work log file F4 (ACT 14: No), the processing proceeds to ACT 16.
In ACT 14, when it is determined that there is the transmission request of the work log file F4, the communication control unit 301 transmits the work log file F4 to the server apparatus 10 (ACT 15).
Next, in ACT 16, the work log generation unit 300 determines whether or not all the pieces of work are completed. Further, the completion of all the pieces of work may be determined by a fact that the start time 43 and the end time 44 of the work corresponding to the work content 42 to be performed on the day are all recorded in the work log file F4. Next, when it is determined that all the pieces of work are completed (ACT 16: Yes), the portable terminal 12a terminates the processing of FIG. 11. On the other hand, when it is not determined that all the pieces of work are completed (ACT 16: No), the processing returns to ACT 10.
Next, a flow of processing performed by the server apparatus 10 will be described. The work result accumulation unit 204 requests the portable terminal 12a to transmit the work log file F4 (ACT 20). Further, the transmission request of the work log file F4 may be performed at a predetermined timing.
The communication control unit 205 receives the work log file F4 from the portable terminal 12a (ACT 21).
The work result accumulation unit 204 calculates the new average work time 61 and the new number of times of work experience 62 based upon the record content of the work result file F1 and the record content of the received work log file F4 (ACT 22).
The work result accumulation unit 204 updates the work result file F1 by overwriting the calculated new average work time 61 and the new number of times of work experience 62 on the work result file F1 (ACT 23). Then, the server apparatus 10 terminates the processing of FIG. 11.

### Flow of Processing Performed by a Maintenance Management System

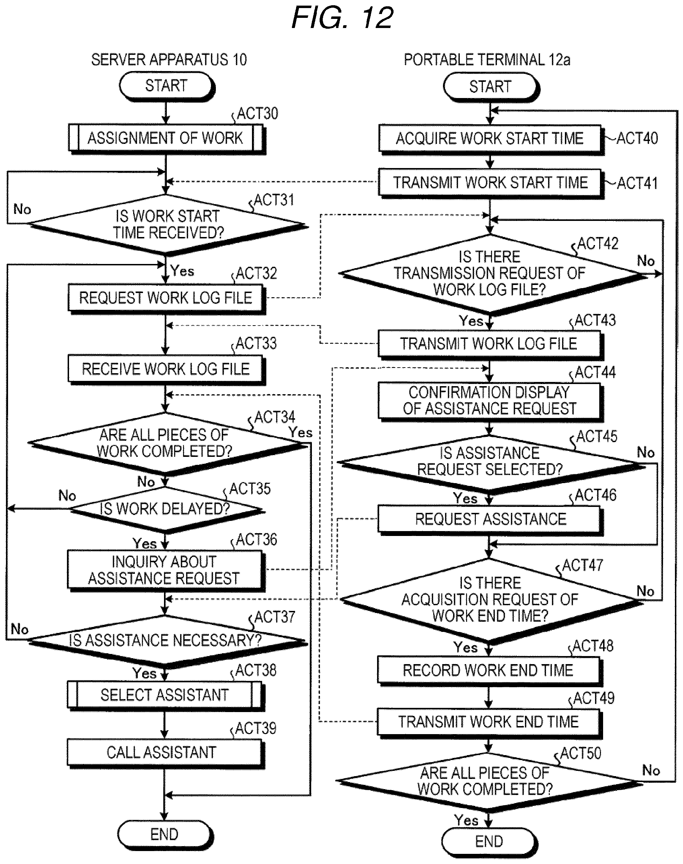

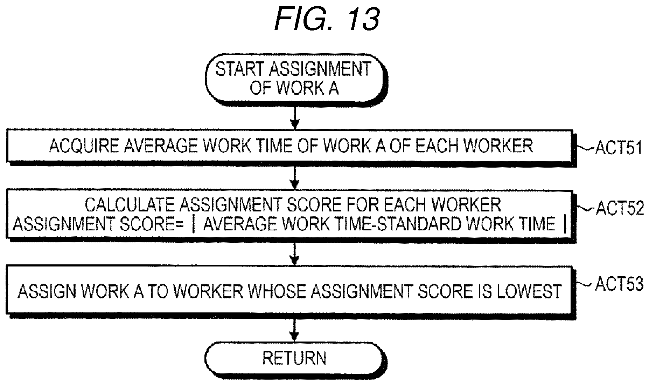

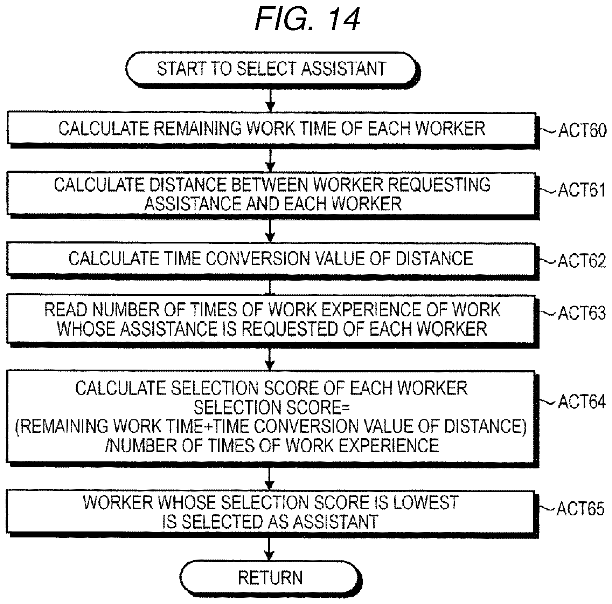

Next, a flow of a series of processing performed by the maintenance management system 1 will be described. FIG. 12 is a flowchart illustrating an example of a flow of a series of processing performed by the maintenance management system 1. First, a flow of processing of the server apparatus 10 will be described. Further, the maintenance management system 1 manages the progress of the work of all the workers T, but, in the following case, in order to simplify the description, the maintenance management system 1 will be described as a system which only manages the progress of the work of the worker Q who owns the portable terminal 12a.
The work assignment unit 200 performs work assignment processing of assigning the work to all the workers T (ACT 30). Further, the detailed flow of the work assignment processing will be described later (FIG. 13).
After the work assignment processing is completed, the progress state estimation unit 201 determines whether or not the start time 43 is received from the portable terminal 12a (ACT 31). When it is determined that the start time 43 is received (ACT 31: Yes), the processing proceeds to ACT 32. On the other hand, when it is not determined that the start time 43 is received (ACT 31: No), the processing repeats ACT 31.
The progress state estimation unit 201 requests the portable terminal 12a to transmit the work log file F4 (ACT 32). The transmission request is performed at a predetermined timing, for example, every 10 minutes.
The communication control unit 205 receives the work log file F4 from the portable terminal 12a (ACT 33).
The progress state estimation unit 201 determines whether or not all the pieces of work are completed (ACT 34). When it is determined that all the pieces of work are completed (ACT 34: Yes), the server apparatus 10 terminates the processing of FIG. 12. On the other hand, when it is not determined that all the pieces of work are completed (ACT 34: No), the processing proceeds to ACT 35. Further, the completion of all the pieces of work may be determined by a fact that the start time 43 and the end time 44 of the work corresponding to the work content 42 to be performed on the day are all recorded in the received work log file F4.
When all the pieces of work are not completed, the progress state estimation unit 201 determines whether or not the work is delayed in ACT 35. When it is determined that the work is delayed (ACT 35: Yes), the processing proceeds to ACT 36. On the other hand, when it is not determined that the work is delayed (ACT 35: No), the processing returns to ACT 32. Further, for example, whether or not the work is delayed is determined in such a manner that the elapsed time calculated by subtracting the start time 43 recorded in the work log file F4 from the current time is compared with the average work time 61 registered in the work result file F1, and when the elapsed time exceeds the average work time 61, it may be determined that the work is delayed. Further, when the elapsed time exceeds the standard work time 71 by comparing the elapsed time with the standard work time 71 registered in the standard work time file F2, it may be determined that the work is delayed.
When it is determined that the work is delayed in ACT 35, the assistance request confirmation unit 202 inquires of the communication control unit 205 about whether or not to perform the work assistance request in the portable terminal 12a (ACT 36). Specifically, the server apparatus 10 causes the portable terminal 12a to display a screen for confirming the necessity of the assistance request illustrated in FIG. 10.
Next, the communication control unit 205 receives a response from the portable terminal 12a, and the assistance request confirmation unit 202 determines whether or not the assistance is necessary (ACT 37). When it is determined that the assistance is necessary (ACT 37: Yes), the processing proceeds to ACT 38. On the other hand, when it is not determined that the assistance is necessary (ACT 37: No), the processing returns to ACT 32.
When it is determined that the assistance is necessary in ACT 37, the assistant selection unit 203 performs assistant selection processing of selecting an assistant (ACT 38). Further, a detailed flow of the assistant selection processing will be described later (FIG. 14).
Next, the assistant selection unit 203 causes the communication control unit 205 to call the selected assistant. Then, the server apparatus 10 terminates the processing of FIG. 12.
Further, even though not illustrated in the flowchart of FIG. 12, in response to ACT 39, the server apparatus 10 causes the portable terminal of the selected worker S to display the information to the effect that the work of the worker Q who owns the portable terminal 12a is desired to be assisted. The called worker S determines whether or not to respond to the assistance request. When the assistance is possible, the worker S goes to a place of the worker Q who requests the assistance and assists the work as soon as the work currently being performed is completed.
Next, a flow of processing performed by the portable terminal 12a will be described. First, the operation control unit 303 detects that a column indicating the start time 43 of the work content 42 is pressed down in the work log file F4, and acquires the time when the column is pressed down, for example, from the timer of the CPU 30a (ACT 40). Further, the work log generation unit 300 records the acquired time in the pressed column of the work log file F4 as the start time 43.
Next, the work log generation unit 300 causes the communication control unit 301 to transmit the acquired start time 43 to the server apparatus 10 (ACT 41).
The communication control unit 301 determines whether or not there is a transmission request of the work log file F4 from the server apparatus 10 (ACT 42). When it is determined that there is the transmission request of the work log file F4 (ACT 42: Yes), the processing proceeds to ACT 43. On the other hand, when it is not determined that there is the transmission request of the work log file F4 (ACT 42: No), the processing repeats ACT 42.
When it is determined that there is the transmission request of the work log file F4 in ACT 42, the communication control unit 301 transmits the work log file F4 to the server apparatus 10 (ACT 43).
When receiving an inquiry about whether or not the assistance request is performed from the server apparatus 10, the display control unit 302 performs the confirmation display of the assistance request (FIG. 10) on the display 34a (ACT 44). Further, the processing of ACT 44 is so-called interruption processing to be executed when receiving the inquiry about whether or not the assistance request is performed from the server apparatus 10. Therefore, the processing thereof is not necessarily executed at the position of ACT 44 of the flowchart of FIG. 12.
The operation control unit 303 determines whether or not the assistance request is selected (ACT 45). When it is determined that the assistance request is selected (ACT 45: Yes), the processing proceeds to ACT 46. On the other hand, when it is not determined that the assistance request is selected (ACT 45: No), the processing proceeds to ACT 47. Further, when detecting that the assistance request button 38a is pressed down, the operation control unit 303 determines that the assistance request is selected. Further, when it is detected that the assistance unnecessary button 38b is pressed down, it is not determined that the assistance request is selected.
When it is determined that the assistance request is selected in ACT 45, the operation control unit 303 causes the communication control unit 301 to transmit information to the effect that the assistance request is necessary to the server apparatus 10 in ACT 46. On the other hand, when it is not determined that the assistance request is selected in ACT 45 or following ACT 46, the operation control unit 303 determines whether or not there is an acquisition request of the end time 44 of the work currently being performed (ACT 47). Specifically, the same determination as that of ACT 12 described above is performed. When it is determined that there is the acquisition request of the end time 44 (ACT 47: Yes), the processing proceeds to ACT 48. On the other hand, when it is not determined that there is the acquisition request of the end time 44 (ACT 47: No), the processing returns to ACT 42.
In ACT 47, when the acquisition of the end time 44 is requested, the work log generation unit 300 records, for example, the time acquired from the timer of the CPU 30a in the pressed column of the work log file F4 (ACT 48).
Next, the work log generation unit 300 causes the communication control unit 301 to transmit the end time 44 to the server apparatus 10 (ACT 49).
Next, the work log generation unit 300 determines whether or not all the pieces of work are completed (ACT 50). Specifically, the same determination as that of ACT 16 described above is performed. When it is determined that all the pieces of work are completed (ACT 50: Yes), the portable terminal 12a terminates the processing of FIG. 12. On the other hand, when it is not determined that all the pieces of work are completed (ACT 50: No), the processing returns to ACT 40.
Further, in the flowchart illustrated in FIG. 12, the server apparatus 10 is configured to inquire of the portable terminal 12a about whether or not the assistance request is necessary, and the server apparatus 10 is configured to select the assistant based upon the reply thereto. That is, the server apparatus 10 is an apparatus which selects the assistant according to the reply to the confirmation by the assistance request confirmation unit 202. However, the server apparatus 10 is not limited to the configuration described above.
That is, the assistant selection unit 203 may be configured to select the worker S on the condition that the communication control unit 205 of the server apparatus 10 receives the assistance request issued from the portable terminal 12a without waiting for the inquiry from the server apparatus 10.

### Flow of Work Assignment Processing

FIG. 13 is a flowchart illustrating an example of a flow of the work assignment processing. In particular, FIG. 13 is a flowchart illustrating an example of a flow of processing of determining a worker to which a specific work A is assigned, and illustrates a detailed flow of the processing to be performed in ACT 30 of FIG. 12. First, the work assignment unit 200 acquires the average work time of the work A of all the workers T from the work result file F1 (ACT 51).
Next, the work assignment unit 200 respectively calculates assignment scores of all the workers T (ACT 52). The assignment score is an example of an index indicating an ability of the worker. Here, an absolute value of a difference between the average work time 61 of the work A and the standard work time 71 of the work A is defined as the assignment score. As a worker whose assignment score is lower, the worker can perform the work A in the time close to the standard work time 71, that is, it can be determined that the ability of the worker with respect to the work A is high. Further, in ACT 52, as a difference value obtained by subtracting the standard work time 71 of the work A from the average work time 61 of the work A is smaller, it may be simply determined that the ability of the worker with respect to the work A is high.
The work assignment unit 200 assigns the work A to a worker whose assignment score is the lowest (ACT 53). Thereafter, the processing proceeds to ACT 31 of FIG. 12.
Further, actually, since it is necessary to assign a plurality of pieces of work to each worker, the processing of FIG. 13 is executed for each type of work. As a result, there is a possibility that a plurality of pieces of work may be assigned to the same worker. In this case, for example, a procedure may be performed in such a manner that a piece of work having the longest standard work time 71 is assigned to a worker whose assignment score with respect to the work is the lowest and other works are assigned to the remaining workers.

### Flow of Assistant Selection Processing

FIG. 14 is a flowchart illustrating an example of a flow of the assistant selection processing. First, the assistant selection unit 203 calculates the remaining work time of the work currently being performed by the worker R who is a candidate of the assistant (ACT 60). Specifically, the remaining work time of the work currently being performed is calculated based upon the start time 43 of the work currently being performed read from the work log file F4, the current time, and the standard work time 71 of the work read from the standard work time file F2.
Next, the assistant selection unit 203 calculates a distance between the worker Q requesting the assistance and the worker R who is the candidate of the assistant (ACT 61). When all the workers T are working in the stores, a distance between a store where the worker Q is working and a store where the worker R is working may be respectively calculated. Further, when the worker Q requesting the assistance and the worker R who is the candidate of the assistant are working in the same store, the distance therebetween may be calculated based upon layout information in the store. Further, the assistant selection unit 203 calculates a time conversion value of the distance calculated in ACT 61 (ACT 62). Specifically, when the worker R moves on foot to go for the assistance, for example, 1 km is converted into 15 minutes, thereby calculating the time conversion value. When the worker R moves by a vehicle to go for the assistance, the conversion is performed by a predetermined conversion method. Further, the time required to go for the assistance can be predicted by the processing of ACT 62.
Next, the assistant selection unit 203 reads the number of times of work experience 62 of the work receiving the assistance request from the work result file F1 for each of the workers R who become candidates of the assistant (ACT 63).
The assistant selection unit 203 calculates a selection score for each of the assistant candidates R who become the candidates of the assistant (ACT 64). The selection score is, for example, a value obtained by dividing the sum of the remaining work time calculated in ACT 60 and the time conversion value of the distance between the workers calculated in ACT 62 by the number of times of work experience 62 read in ACT 63. That is, when the number of times of work experience is the same, the selection score becomes a lower value as the remaining work time is smaller and the worker is present closer to the worker who requests the assistance. Further, the selection score becomes a lower value as the number of times of work experience 62 is larger.
Next, the assistant selection unit 203 selects the worker S whose selection score is the lowest as the assistant (ACT 65). Thereafter, the processing proceeds to ACT 39 of FIG. 12.
As described above, in the server apparatus 10 (the maintenance management apparatus) according to the embodiment, the progress state estimation unit 201 (the estimation unit) estimates the progress state of the current work of all the workers T based upon the past average work time of each worker with respect to the pieces of work respectively assigned to all the workers T, the start time 43 of the work currently being performed by each worker, and the current time. Further, the assistant selection unit 203 (the selection unit) selects the worker S who assists the worker Q from among the workers R (the second workers) other than the worker Q (the first worker) whose work is estimated to be delayed by the progress state estimation unit 201, based upon the information on the progress state of the work of the worker R, the information on the distance between the worker Q and the worker R, and the information on the ability of the worker R. Therefore, when a delay occurs in the work currently in progress, the delay can be promptly solved.
Further, the server apparatus 10 (the maintenance management apparatus) according to the embodiment calculates the average work time 61 of each work based upon the start time 43 and the end time 44 when all the workers T performed the same work in the past. The progress state estimation unit 201 can estimate the progress state of the work of the worker R with high accuracy by using the average work time 61.
Further, in the server apparatus 10 (the maintenance management apparatus) according to the embodiment, the assistant selection unit 203 (the selection unit) selects the worker S who assists the worker Q from among the workers R based upon the remaining work time of the work currently being performed by the worker R, the time required for the worker R to go to the worker Q for the assistance (the time conversion value of the distance), and the number of times of work experience 62 of the work being performed by the worker Q of the worker R. Therefore, even though the assistance is performed, it is possible to select the worker S having little influence on the progress of the whole work.
Further, in the server apparatus 10 (the maintenance management apparatus) according to the embodiment, the assistance request confirmation unit 202 (the confirmation unit) confirms whether or not the assistance of the work is necessary for the worker Q. The assistant selection unit 203 (the selection unit) selects the worker S who assists the worker Q on the condition that the worker Q replies that the assistance of the work is necessary with respect to the confirmation of the assistant request confirmation unit 202. Therefore, it is possible to inquire of the worker Q about whether or not the assistance is necessary before the delay of work progress becomes apparent.
Further, in the server apparatus 10 (the maintenance management apparatus) according to the embodiment, the work assignment unit 200 (the assignment unit) determines a worker to be assigned to work based upon the standard work time 71 required to complete the work and the average work time 61 of each worker for the work. Therefore, the work can be assigned to all the workers T so that the whole work efficiency is improved.
Further, in the server apparatus 10 (the maintenance management apparatus) according to the embodiment, the communication control unit 205 (the receiving unit) receives the assistance request from the worker Q. The assistant selection unit 203 (the selection unit) selects the worker S performing the assistance from among the workers R other than the worker Q who issues the assistance request on the condition that the communication control unit 205 receives the assistance request. Therefore, the worker Q can request the assistance without waiting for the confirmation by the assistance request confirmation unit 202 (the confirmation unit).
The control programs P1 and P2 can be stored in a computer-readable medium.
While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A maintenance management apparatus, comprising:
estimation means for estimating a progress state of current work of each worker based upon a past average work time of each worker with respect to the pieces of work assigned to a plurality of workers, a start time of work currently being performed by each worker, and a current time; and
selection means for selecting a worker who assists a first worker from among second workers other than the first worker whose work progress is estimated to be delayed by the estimation means based upon information on a progress state of work of the second worker, information on a distance between the first worker and the second worker, and information on an ability of the second worker.

2. The maintenance management apparatus according to claim 1, wherein
the past average work time is calculated based upon a start time and an end time when each worker performed the same work in the past.

3. The maintenance management apparatus according to claim 1 or 2, wherein
the selection means selects the worker who assists the first worker based upon a remaining work time of the work currently being performed by the second worker, a time required for the second worker to go to the first worker for the assistance, and the number of times of work experience of the work being performed by the first worker of the second worker.

4. The maintenance management apparatus according to any one of claims 1 to 3, further comprising:
confirmation means for confirming whether or not the assistance of the work is necessary for the first worker, wherein
the selection means selects the worker who assists the first worker on the condition that the first worker replies that the assistance of the work is necessary with respect to the confirmation of the confirmation means.

5. The maintenance management apparatus according to any one of claims 1 to 4, further comprising:
assignment means for determining a worker who is assigned to work based upon a standard work time required to complete the work and the average work time of each worker for the work.

6. The maintenance management apparatus according to any one of claims 1 to 5, further comprising:
receiving means for receiving an assistance request from the worker, wherein
the selection means selects a worker performing the assistance from among workers other than a worker who issues the assistance request on the condition that the receiving means receives the assistance request.

7. A maintenance management method, comprising the steps of:
estimating a progress state of current work of each worker based upon a past average work time of each worker with respect to the pieces of work assigned to a plurality of workers, a start time of work currently being performed by each worker, and a current time; and
selecting a worker who assists a first worker from among second workers other than the first worker whose work progress is estimated to be delayed by the estimating step based upon information on a progress state of work of the second worker, information on a distance between the first worker and the second worker, and information on an ability of the second worker.

8. The maintenance management method according to claim 7, wherein the past average work time is calculated based upon a start time and an end time when each worker performed the same work in the past.

9. The maintenance management method according to claim 7 or 8, further comprising the step of :
selecting the worker who assists the first worker based upon a remaining work time of the work currently being performed by the second worker, a time required for the second worker to go to the first worker for the assistance, and the number of times of work experience of the work being performed by the first worker of the second worker.

10. The maintenance management method according to any one of claims 7 to 9, further comprising steps of:
confirming whether or not the assistance of the work is necessary for the first worker, and
selecting the worker who assists the first worker on the condition that the first worker replies that the assistance of the work is necessary with respect to the confirming step.

11. The maintenance management method according to any one of claims 7 to 10, further comprising step of:
determining a worker who is assigned to work based upon a standard work time required to complete the work and the average work time of each worker for the work.

12. The maintenance management method according to any one of claims 7 to 11, further comprising steps of:
receiving an assistance request from the worker, and
selecting a worker performing the assistance from among workers other than a worker who issues the assistance request on the condition that the assistance request is received in the receiving step.

13. A computer program comprising instructions which, when the program is executed by a computer, cause the computer to carry out the steps of the method according to any one of claims 7 to 12.

14. A computer-readable medium having stored thereon the computer program of claim 13.
